# EUROPEAN PATENT SPECIFICATION

(11) **EP 3 224 082 B1**
(45) Date of publication and mention of the grant of the patent: **17.04.2019**
(21) Application number: 15820333.1
(22) Date of filing: 10.11.2015
(51) Int. Cl.: B60P 1/43

(54) **A RAMP DOOR MECHANISM WITH HYDRAULIC PISTON AND PROTECTION COVERS**
RAMPENTÜRMECHANISMUS MIT HYDRAULISCHEM KOLBEN UND SCHUTZABDECKUNGEN
MÉCANISME DE PORTE-RAMPE COMPRENANT PISTON HYDRAULIQUE ET CAPOTS DE PROTECTION

(30) Priority: 28.11.2014 TR 201414218
(43) Date of publication of application: 04.10.2017
(73) Proprietor: Otokar Otomotiv ve Savunma Sanayi Anonim Sirketi, 54580 Sakarya (TR)
(72) Inventor: BAHAR, Ali Kemal, 54580 Sakarya (TR); ALKAN, Senol, 54580 Sakarya (TR); ERSEN, Serkan, 54580 Sakarya (TR)
(74) Representative: Inal, Aysegul Seda
(86) International application number: PCT/TR2015/050167
(87) International publication number: WO 2016/085430

(56) References cited:
- EP-A1- 2 573 501
- DE-A1- 3 336 668
- US-A1- 2010 123 330

## Description

### Technical Field of the Invention

The invention subject to the application is related to a ramp door mechanism with hydraulic piston and protection covers for vehicles where safety criteria are important.

### Known State of the Art related to the Invention (Prior Art)

The invention subject to the application is related to a mechanism that has been developed to avoid any kind of security weakness related to doors of vehicles that open, where safety criteria is important and as the vehicles carry passengers or loads or objects in various sizes; and has been developed for the vehicle to continue to move with the least deformation.

Said mechanism has been aimed to be applied to any kind of opening/closing door of a mechanism in order to increase safety and to minimize any damages that may occur. This system which is used in vehicles related with ramp door mechanisms and safety issues has been developed as a ramp door that can be opened having a wide door section which provides protection against external attacks. As the ramp type door motion mechanism located at the external surface of the vehicle is kept under protection by means of the developed invention, during the time when the vehicle is used for domestic security interventions, the vehicle can continue to move without being damages and thereby during emergency climbing off and on, the vehicle can be quickly loaded and unloaded.

A loss in the inner volume can be seen when the piston motion mechanism is positioned inside the vehicle in ramp door mechanisms that are applied to the known state of the art of the invention. When said mechanism is mounted outside of the vehicle it is then exposed to external threats and damages. By means of the mechanism developed according to the invention the mechanism has been protected against any external attacks. The mechanism shall not deteriorate during attacks that aim to damage the vehicle.

EP2 573 501 A1 discloses a ramp door mechanism comprising hydraulic piston, a ramp door rotating bearing and a hydraulic drive piston and a top bearing.

The document numbered US 20100123330 is also related to a ramp door within the known state of the art, however said mechanism has been attached to the body by means of simple hinge structures and any kind of security concern was not taken into consideration. When examined both in terms of physical and functions aspects it can be clearly understood that this ramp door is not similar to the invention subject to the application.

### Brief Description of the Invention and its Aims

The ramp door mechanism invention which makes doors that open safer in vehicles where protection characteristics against security weaknesses need to be maximum, must provide safety for the objects that need to be taken out of the vehicle which is protected against external attacks.

The door section in vehicles having ramp type doors need to be large and the vehicle should be able to be loaded and unloaded in a very short period of time. As the mechanism which shall provide the protection of the vehicle is located outside of the vehicle, space is also saved in the inner volume of the vehicle.

The mechanism related to sturdy and protected piston structures can also be easily protected against the external attacks of the vehicle. Piston mechanisms are turned into protected structures against external attacks by means of piston protection covers.

In the present situation, vehicles which need to be secure, the pistons are usually mounted inside the vehicle such that they occupy space or are mounted outside of the vehicle such that they create security weakness against external attacks.

The following shall be carried out by means of the hydraulic piston ramp door mechanism that has been formed by bringing the mechanical sub parts of the invention together;
- Space is saved inside a closed volume by means of the piston door not being located inside the vehicle,
- The vehicle provides protection against external attacks by means of the protection structure developed for the piston structure,
- It is enabled for the vehicle to operate safely during security-critical events,
- The loads that are to be loaded into the vehicle shall be able to be easily unloaded-loaded,
- As serious changes cannot be carried out in terms of the total number of parts relating to the applications carried out in the known state of the art, the financial liability shall be kept at a minimum according to functional development.

### Definitions of the figures describing the invention

The drawings that have been prepared in order to further explain the ramp door mechanism developed according to the invention, which makes the opening and/or closing of doors in vehicles safer where the protection characteristics against security weakness is desired to be maximum, is described below.

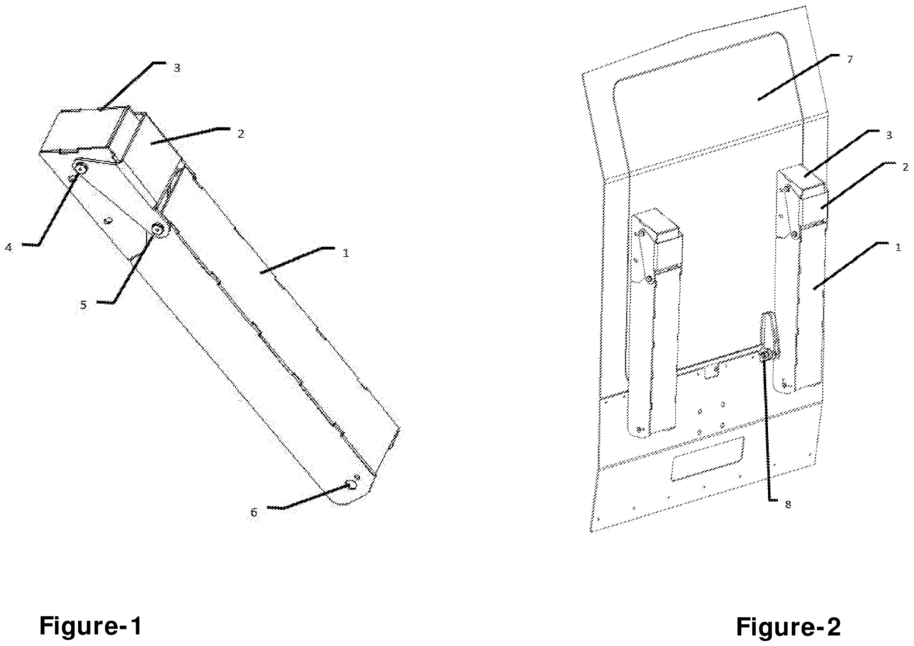

Figure 1- General View of the Protected Piston
Figure 2- General View of the Ramp Door

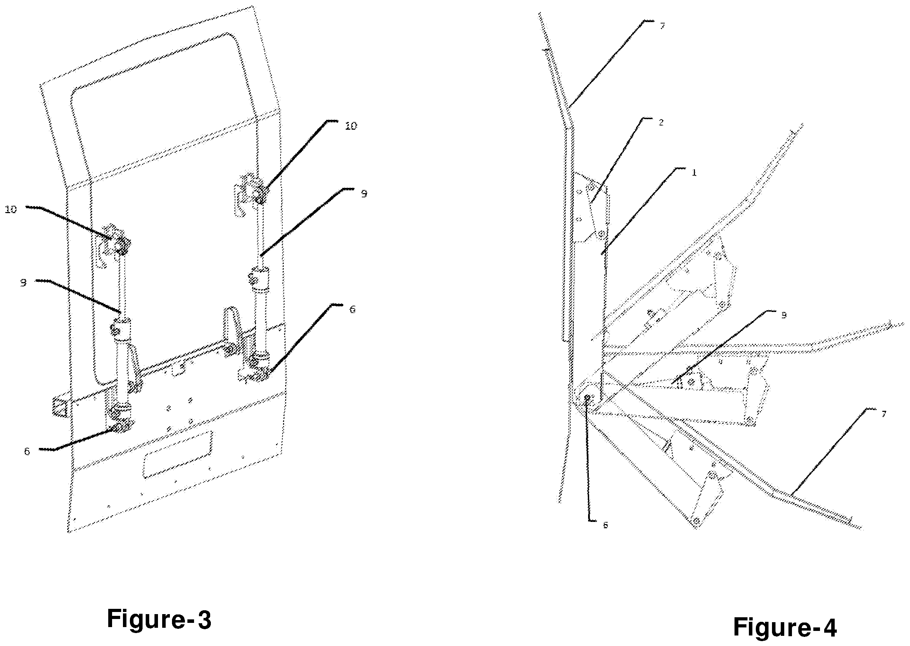

Figure 3- General View of the Inner Side of the Hydraulic Piston Structure.
Figure 4- View of the Door Opening Scenario

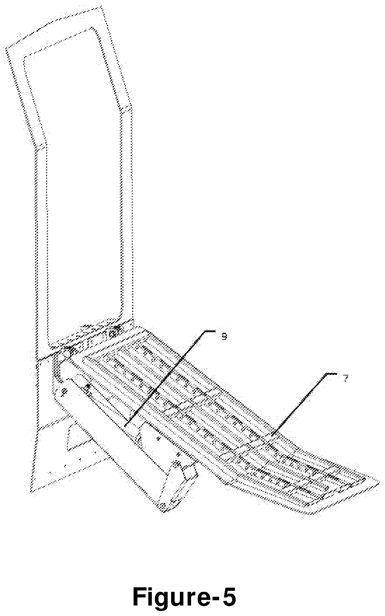

Figure 5-View of the Open Position of the Ramp Door

### Definitions of the aspects/ parts/sections forming the Invention

The parts/sections/aspects within the figures that have been prepared in order to further explain the ramp door mechanism developed according to the invention, which makes the opening and/or closing of doors in vehicles safer where the protection characteristics against security weakness is desired to be maximum, have each been numbered and the references of each number has been listed below.
**1.** Piston Protection Bottom Cover
**2.** Piston Protection Intermediate Cover
**3.** Piston Protection Top Cover
**4.** Rotation Pin
**5.** Connection Pin
**6.** Bottom Bearing Pin
**7.** Ramp Door
**8.** Ramp Door Rotation Bearing
**9.** Hydraulic Drive Piston
**10.** Top Bearing

### Detailed Description of the Invention

The ramp door mechanism which enables the opening doors to be safe in a vehicle for which, protection characteristics are desired to be maximum against security weaknesses subject to the invention comprises:
- A piston protection bottom cover (1) an intermediate cover (2) and a top cover (3) which provides protection against security weaknesses of pistons,
- A rotation pin (4), connection pin (5) and bearing pin (6) which enable the rotation, placing into bearing and fixing of pistons,
- A ramp door (7) structure having a hydraulic piston which can eliminate security weaknesses,
- A ramp door rotation bearing (8) which shall make the ramp door structure rotations easier,
- A hydraulic drive piston (9) and a top bearing (10) which enable rapid movements of the door during ramp door motions.

The basic application of the ramp door mechanism invention having a piston protected cover used in vehicles subject to the application where security criteria is of significant importance is as follows;
- The protected piston structure provides a safety protection for piston protection bottom cover (1), piston protected intermediate cover (2), piston protected top cover (3) which can be easily understood from the general view of the protected piston structure.
- The parts numbered (4), (5) and (6) are the covers, rotation connection and bearing pins.
- When the protection bottom cover (1) and protection intermediate cover (2) move on the pins (4),(5),(6) when the ramp door (7) is moving.
- The ramp door rotation bearing (8) enables the related rotation of the ramp door (7) subject to the invention.
- The hydraulic piston structure (9) is a main mechanic structure that provides the general operation of the system without closing the piston covers.
- The top bearing mechanism (10) provides ramp door connection.
- The bottom bearing pin (6) provides the coupling to the body from the bottom section of the piston (9).
- The motion of the ramp door (7) and the protection covers (1), (2), (3), are provided only by means of the hydraulic drive piston (9).
- When the ramp door (7) is closed the hydraulic piston (9) protection covers (1), (2), (3) also assume a closed position on their own and thereby provide the required protection.

## Claims

1. A ramp door mechanism having a hydraulic piston protection cover for a vehicle for which, security criteria are important; said mechanism having a ramp door (7) structure having a hydraulic piston which can eliminate security weaknesses, a ramp door rotation bearing (8) which shall make the ramp door structure rotations easier, a hydraulic drive piston (9) and a top bearing (10) which enable rapid movements of the door during ramp door motions **characterized in** comprising
• a piston protection bottom cover (1) an intermediate cover (2) and a top cover (3) which provides protection against security weaknesses of pistons,
• a rotation pin (4), connection pin (5) and bearing pin (6) which enable the rotation, placing into bearing and fixing of pistons protection covers.

2. A ramp door mechanism according to claim 1, **characterized in that** the piston protection intermediate cover (2) and the piston protection bottom cover (1) move on the rotation pin (4), connection pin (5) and bearing pin (6) during the movement of the ramp door (7).

3. A ramp door mechanism according to claim 1, **characterized in that** the bearing pin (6) has a structure such that it provides coupling to the body via the bottom section of the piston (9).

4. A ramp door mechanism according to claim 1, characterized that the movement of the ramp door (7) and protection covers (1,2 and 3) are provided only by the motion of the hydraulic drive piston (9).

5. A ramp door mechanism according to claim 1, **characterized in that** the protection covers (1, 2 and 3) of the hydraulic pistons (9) stay in the closed position when the ramp door (7) is closed.

## Patentansprüche

1. Rampentürmechanismus mit einer hydraulischen Kolbenschutzabdeckung für ein Fahrzeug, für das Sicherheitskriterien wichtig sind; der Mechanismus mit einer Rampentür (7) Struktur mit einem Hydraulikkolben, der Sicherheitsschwächen beseitigen kann, einem Rampentürdrehlager (8), das die Drehbewegungen der Rampentürstruktur erleichtern soll, einem hydraulischen Antriebskolben (9) und einem oberen Lager (10), die schnelle Bewegungen der Tür während der Rampentürbewegungen ermöglichen, **dadurch gekennzeichnet, dass** sie umfasst
• eine Kolbenschutzunterabdeckung (1), eine Zwischenabdeckung (2) und eine Oberabdeckung (3); die Schutz vor Sicherheitsschwächen der Kolben bietet,
• Drehbolzen (4), Verbindungsstift (5) und Lagerstift (6), die das Drehen, Einlegen und Fixieren von Kolbenschutzabdeckungen ermöglichen.

2. Rampentürmechanismus nach Anspruch 1, **dadurch gekennzeichnet, dass** sich die Kolbenschutzzwischenabdeckung (2) und die Kolbenschutzunterabdeckung (1) während der Bewegung der Rampentür (7) auf dem Drehbolzen (4), dem Verbindungsstift (5) und dem Lagerstift (6) bewegen.

3. Rampentürmechanismus nach Anspruch 1, **dadurch gekennzeichnet, dass** der Lagerstift (6) eine solche Struktur aufweist, dass er über den unteren Abschnitt des Kolbens (9) eine Verbindung mit dem Körper vorsieht.

4. Rampentürmechanismus nach Anspruch 1, **dadurch gekennzeichnet, dass** die Bewegung der Rampentür (7) und der Schutzabdeckungen (1, 2 und 3) nur durch die Bewegung des hydraulischen Antriebskolbens (9) vorgesehen sind.

5. Rampentürmechanismus nach Anspruch 1, **dadurch gekennzeichnet, dass** die Schutzabdeckungen (1, 2 und 3) der Hydraulikkolben (9) beim Schließen der Rampentür (7) in der geschlossenen Position bleiben.

## Revendications

1. Mécanisme de porte-rampe avec un couvercle de protection de piston hydraulique pour un véhicule pour lequel les critères de sécurité sont importants ; ledit mécanisme ayant une structure de porte-rampe (7) ayant un piston hydraulique qui peut éliminer des faiblesses de sécurité, un palier de rotation (8) de porte-rampe qui doit faciliter les rotations de la structure de la porte-rampe, un piston d'entraînement hydraulique (9) et un palier supérieur (10) qui permettent des mouvements rapides de la porte pendant les mouvements de la porte-rampe, **caractérisé en ce qu'**il comprend
• un couvercle inférieur (1), un couvercle intermédiaire (2) et un couvercle supérieur (3) de protection de piston qui assurent une protection contre les faiblesses de sécurité des pistons,
• un axe de rotation (4), un axe de liaison (5) et un axe de palier (6) qui permettent la rotation, la mise en place dans le palier et la fixation des couvercles de protection des pistons.

2. Mécanisme de porte-rampe selon la revendication 1, **caractérisé en ce que** le couvercle intermédiaire (2) de protection du piston et le couvercle inférieur (1) de protection du piston se déplacent sur l'axe de rotation (4), l'axe de liaison (5) et l'axe de palier (6) pendant le mouvement de la porte-rampe (7).

3. Mécanisme de porte-rampe selon la revendication 1, **caractérisé en ce que** l'axe de palier (6) a une structure telle qu'il fournit un accouplement au corps via la section inférieure du piston (9).

4. Mécanisme de porte-rampe selon la revendication 1, **caractérisé en ce que** le mouvement de la porte-rampe (7) et des couvercles de protection (1, 2 et 3) n'est assuré que par le mouvement du piston d'entraînement hydraulique (9).

5. Mécanisme de porte-rampe selon la revendication 1, **caractérisé en ce que** les couvercles de protection (1, 2 et 3) des pistons hydrauliques (9) restent en position fermée lorsque la porte-rampe (7) est fermée.
